# EUROPEAN PATENT SPECIFICATION

(11) **EP 0 580 610 B1**
(45) Date of publication and mention of the grant of the patent: **02.10.1996**
(21) Application number: 92906832.8
(22) Date of filing: 24.03.1992
(51) Int. Cl.: B60N 2/00, B62D 21/15

(54) **VEHICLE AND BODY**
FAHRZEUGKARROSSERIE
VEHICULE ET CARROSSERIE

(30) Priority: 28.03.1991 GB 9106712
(43) Date of publication of application: 02.02.1994
(73) Proprietor: BOTHWELL, Peter William, Stratford-upon-Avon, Warwickshire CV37 7LR (GB); BOTHWELL, Roy, Stratford-upon-Avon, Warwickshire CV37 7LR (GB)
(72) Inventor: BOTHWELL, Peter William, Stratford-upon-Avon, Warwickshire CV37 7LR (GB); BOTHWELL, Roy, Stratford-upon-Avon, Warwickshire CV37 7LR (GB)
(74) Representative: Dodd, Graham Marshall
(86) International application number: GB9200536
(87) International publication number: WO9217349

(56) References cited:
- EP-A- 0 159 555
- WO-A-89/08678
- DE-A- 3 925 990
- GB-A- 2 169 377
- US-A- 3 171 669
- US-A- 3 860 258
- US-A- 4 640 527

## Description

The present invention relates to a vehicle defining an internal space for accommodating one or more persons.

It has been proposed, in US 3,860,258, that a vehicle frame structure should have left and right side rails with corrugated energy absorbing sections within which are disclosed hydraulic shock absorbers which support the rails and absorb energy so that they collapse in a controlled linear manner under a major impact load. However, the frame structure is one which supports a vehicle body and there is no disclosure of a vehicle body which protects its occupants in the event of an impact. This document forms the basis of claim 1.

GB 2,169,377A discloses an impact energy absorber for a vehicle sub-frame or chassis, incorporating collapsible tubing and hydraulic piston/cylinder units. Again, however, there is no disclosure of any body structure which provides for protection of its occupants.

Accordingly, it is broadly the objection of the present invention to provide a new principle in body structures for vehicles offering a high level of protection against front, rear and side impacts. This object has been accomplished by the subject-matter defined in claim 1.

The vehicle preferably comprises front and rear end members spanning the gap between the hollow members. The end members may have respective connectors in telescopic relation with respective ones of the hollow members so that, if the end members are subjected to impact acting in a direction towards the internal space defined by the vehicle, they will resist intrusion of extraneous structure into that space and will move telescopically relative to the hollow members of the vehicle. The hollow members may contain energy-absorbing means which can yield under the effect of impact on either the end members or directly on the hollow structures.

Each of the front member and the rear member preferably span a gap between the left-hand and right-hand members, so that a single front member is interposed between a front end of the body and both the right-hand and left-hand members and a single rear member is interposed between a rear end of the body and both the right-hand and left-hand members. Alternatively, there may be a first front member interposed between the front end of the body and the right-hand member and a second front member interposed between the front end of the body and the left-hand member, a corresponding pair of rear members being provided at the rear of the body. Where a pair of front members is provided, these may be connected directly to each other or may be connected to each other through the intermediary of one or more further components.

In a case where a common front member is provided, this is preferably arranged telescopically with respect to both the right-hand and left-hand members. Where a pair of front members are provided, these are preferably arranged telescopically with respect to the right-hand and left-hand members respectively. A common rear member is preferably arranged telescopically with respect to both the right-hand and left-hand members but, in a case where a pair of rear members is provided, these may be arranged telescopically with respect to respective ones of the right-hand and left-hand members.

At least one pair of said members and preferably all four of said members are hollow and contain energy absorbing means. The energy-absorbing means is preferably arranged for yieldably opposing movement of the front member or members and/or of the rear member or members relative to the left-hand member and the right-hand member, in directions along the vehicle body.

In a case where energy-absorbing means is provided in both the right-hand and left-hand members, said means is preferably arranged for yieldably opposing lateral collapse of the right-hand and left-hand members.

There may be provided in the internal space defined by the body a single seat for supporting a driver of the vehicle, the seat being disposed between the right-hand and left-hand members. Alternatively, there may be provided in the internal space defined by the body a front seat and a rear seat, both of these seats lying between the right-hand and left-hand members. A larger number of seats may be provided in the internal space defined by the body.

The right-hand and left-hand members are preferably of the same height and this is preferably more than one quarter of the height of the seat or of at least one of the seats. Generally, the seat or each seat will comprise a lower part and an upwardly extending backrest. The backrest of the seat or at least one of the seats preferably extends substantially to the top of said internal space defined by the body.

The right-hand and left-hand members preferably have the same width and this is preferably greater than one tenth of the minimum separation between the right-hand and left-hand members. The width of the right-hand and left-hand members is preferably greater than one quarter of the width of the seat.

The right-hand and left-hand members preferably define respective lateral boundaries of the vehicle body and also preferably define respective lateral boundaries of the said internal space defined by the body.

Examples of vehicles embodying the present invention will now be described, with reference to the accompanying drawings, wherein:
**FIGURE 1** shows a diagrammatic representation of certain parts of a vehicle,
**FIGURE 2** shows diagrammatically a cross section of the vehicle on the line II-II of Figure 1.
**FIGURE 3** shows diagrammatically a plan view of the vehicle of Figure 1,
**FIGURE 4** illustrates an alternative vehicle by a diagrammatic representation of a part of a body of the vehicle,
**FIGURE 5** illustrates a further alternative vehicle diagrammatically by a partial cross section in a vertical plane parallel to a longitudinal centreline of the vehicle,
**FIGURE 6** illustrates a third alternative vehicle by a diagrammatic representation of a plan view of certain parts of the vehicle,
**FIGURE 7** illustrates a fourth alternative vehicle by a view similar to Figure 6,
**FIGURE 8** is a diagrammatic representation of a perspective view of a hollow structure which may be incorporated in any of the alternative vehicles illustrated, together with certain associated parts of the vehicle,
**FIGURES 9 and 10** illustrate further modified vehicles by showing diagrammatically vertical cross sections through modified hollow structures which may be incorporated in the vehicles,
**FIGURE 11** shows diagrammatically a vertical cross section through a further modified structure which may be incorporated in the vehicles,
**FIGURE 12** is a diagrammatic representation of a basic chassis structure which may be incorporated in a further modified vehicle,
**FIGURE 13** illustrates diagrammatically a further example of a hollow structure which may be incorporated in a modified vehicle,
**FIGURE 14** is a representation, similar to Figure 13, showing a further example of a hollow structure which may be incorporated in a modified example of the vehicle and
**FIGURE 15** is a view similar to Figure 2 illustrating a further modification of the vehicle of Figure 2.
**FIGURE 16** is a view similar to Figure 6, showing a further alternative vehicle.

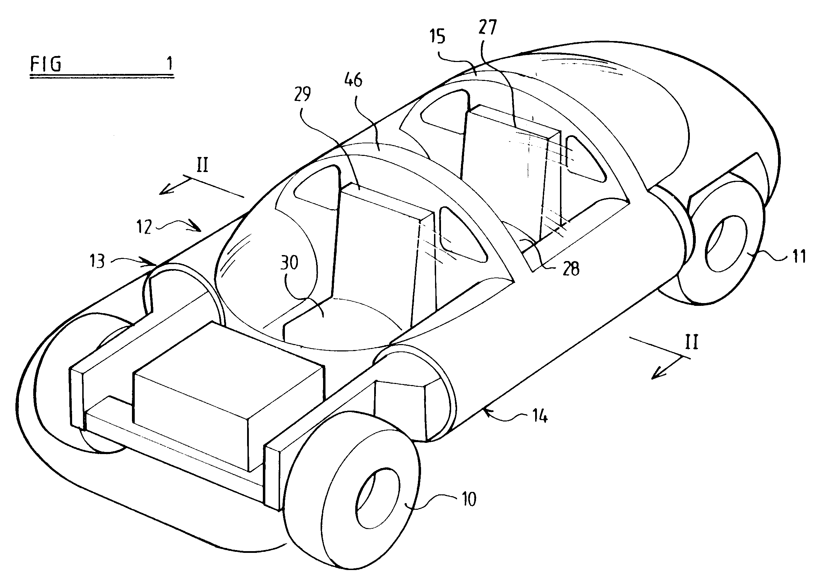

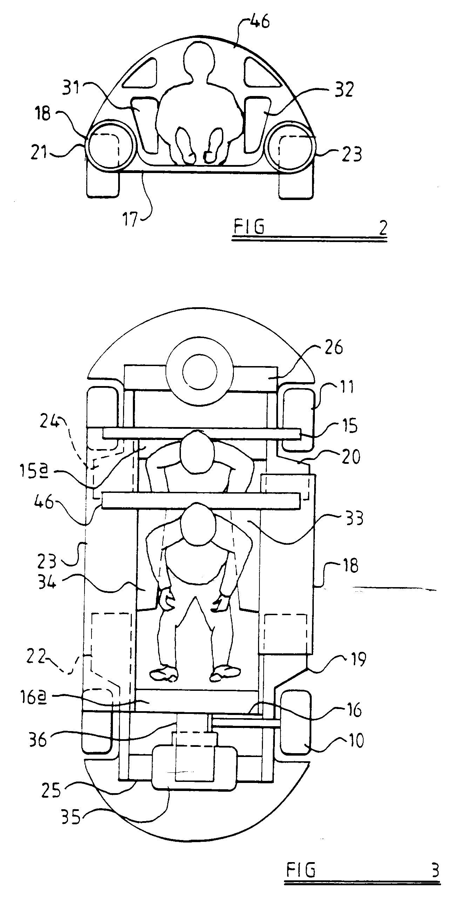

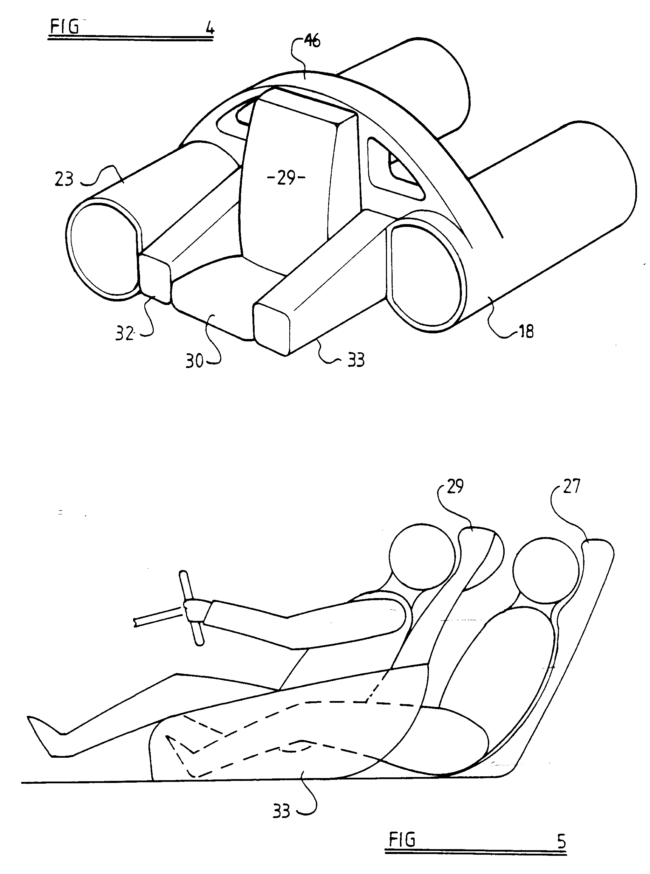

The vehicle illustrated in Figures 1, 2 and 3 of the accompanying drawings is a wheeled vehicle intended for use on roads and to carry two persons. The example illustrated has four wheels. A left-hand front wheel is represented at 10 in the drawing and a left-hand rear wheel is represented at 11. Corresponding wheels are provided at the right-hand side of the vehicle and at least two of the wheels are driven. For example, the front wheels may be driven. At least the front wheels are also steerable.

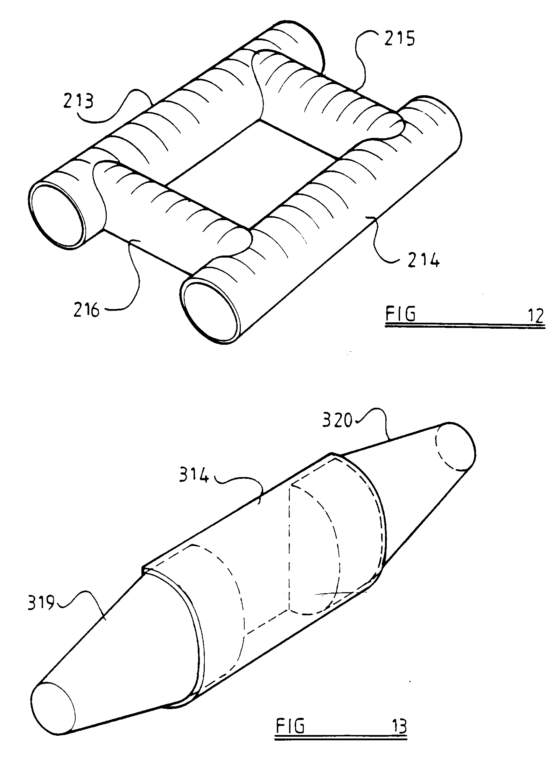

The vehicle comprises a body 12 which is mounted on the wheels and which includes a right-hand hollow structure 13 and a left-hand hollow structure 14. Between the structures 13 and 14, the body defines a space for receiving two persons who are referred to herein as the driver and the passenger. A rear boundary of this space is defined by a bulk head 15 and cross member 15a which extends between the hollow structures 13 and 14 and a front boundary of the space is defined by a front bulk head 16 and cross member 16a indicated in Figure 3. The structures 13 and 14 extend rearwards beyond the rear bulk head 15 and extend forwards beyond the front bulk head 16. At the bottom of the space which accommodates the driver and passenger, there is a floor 17 which spans the gap between the structures 13 and 14. In the example illustrated in Figures 1, 2 and 3, there are two floor layers and the lower one of these is substantially flat and extends between the lowest parts of the structures 13 and 14. The space which accommodates the driver and the passenger is preferably closed above the level of the structures 13 and 14 by a roof which extends forwards from the upper margin of the rear bulk head 15. The highest part of the roof is preferably at approximately the same level as the upper margin of an intermediate bulk head 46 and the roof may incorporate movable panels or be movable as a unit to facilitate access to the interior of the vehicle body 12. The roof may be entirely transparent or partly transparent.

Preferably a part of the roof between the rear bulkhead 15 and the intermediate bulkhead 46 forms a rear door and a part of the roof extending forwards from the intermediate bulkhead forms a front door. The rear door may be of the hatch back type. The doors may be pivoted on the bulkheads and/or on the hollow structures 13 and 14 or one of them. The bulkheads of the body 12 or some of them are preferably hollow, tubular structures.

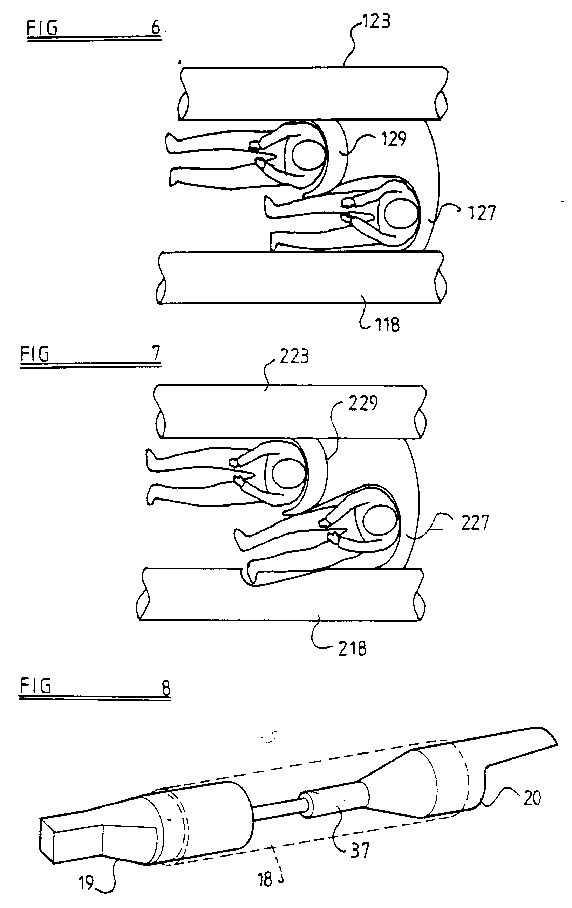

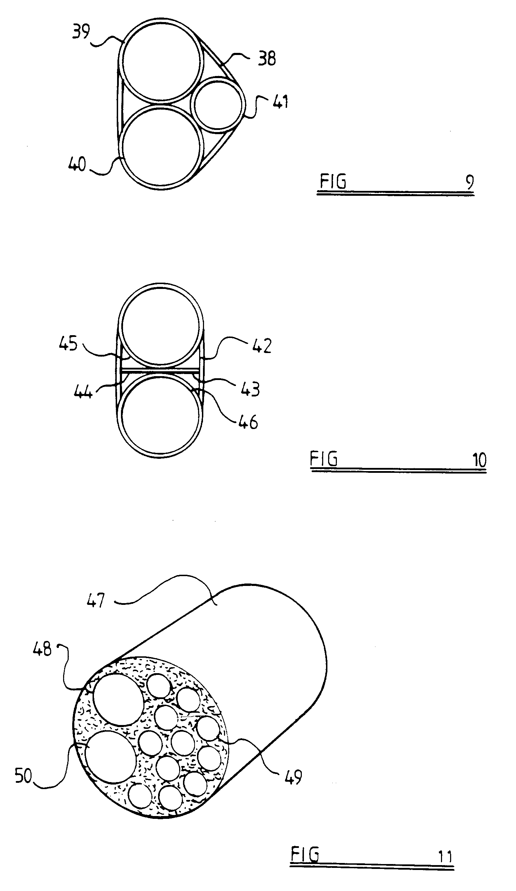

The left-hand hollow structure 14 comprises a rectilinear, elongated, hollow middle member 18 which, in the example illustrated, has a cylindrical profile along its entire length. The middle member 18 is of tubular form and may incorporate internal reinforcements, for example the annular reinforcement shown at 21 in Figure 2. The middle member has no significant taper or steps.

The hollow structure 14 further comprises front and rear members 19 and 20, both of which are in telescopic relation with the middle member 18 at opposite ends thereof. The members 19 and 20 may be elongated and arranged with their lengths parallel to the length of the middle member. The transverse cross sectional shapes of the front and rear members vary along these members. However, each of these members preferably includes a portion of uniform shape in transverse cross section which cooperates with the middle member 18 and is substantially rectilinear. The front and rear members may, for example, slide within respective end portions of the middle member during front and rear impact. As manufactured, the front and rear members are fixed with respect to the middle member, for example by rivets which will shear if the body is subjected to severe front or rear impact.

The right hand hollow structure 13 comprises front, middle and rear members 22, 23 and 24 corresponding respectively to the front, middle and rear members of the structure 14. The vehicle body 12 further comprises a front end member 25 which spans the gap between the front members 19 and 22 and is connected to or is united with those members. The front end member 25 is preferably spaced forwards from the front bulk head 16. The gap between the rear members 20 and 24 is spanned by a rear end member 26 which is connected with or united with the rear members and is spaced rearwards from the rear bulk head 15. The front and rear end members 25 and 26 are preferably hollow. It will be noted that members including 15, 16, 17, 18, 23 and 46 collectively form a frame surrounding the space for the driver and passenger. This frame is substantially quadrilateral. This structure can alternatively be described as a safety cell for containing the driver and passenger.

A seat for supporting the passenger is disposed at the front of the rear bulk head 15 and lies between the middle member 18 and the middle member 23. The seat includes a backrest 27 which may be incorporated in the bulk head 15 and a lower part 28 extending forwards from the backrest. A seat for supporting the driver is spaced forwards from the passenger seat and comprises a backrest 29 and a lower part 30 extending forwards from the backrest. The backrest 29 is preferably incorporated in a bulk head 46 which extends laterally to the middle member 18 and the middle member 23 and upwards to the roof of the body 12. This bulk head may be constructed and arranged in a manner similar to that of the rear bulk head 15 but the bulk head 46 which incorporates the back rest 29 is spaced away from the middle members 18 and 23 adjacent to the floor of the body by apertures 31 and 32 through which the legs of a passenger can extend. It will be noted that the lower part 30 of the driver's seat is spaced from the middle members 18 and 23 sufficiently for the legs of the passenger to be accommodated between the driver's seat and the hollow structures 13 and 14. The backrests include headrests for the passenger and driver.

The overall height of the middle members 18 and 23 preferably exceeds ¼ of the height of the backrest 29 and ¼ of the height of the backrest 27. It will be understood that these backrests may extend upwards to the roof of the body 12. More preferably, the height of the middle members 18 and 23 exceeds one third of the height of the backrests.

The width of the middle members 18 and 23 exceeds ¼ of the width of the lower part 30 of the front seat and of the lower part 28 of the rear seat. Typically, the width of the middle members is approximately equal to the width of the lower parts of the seats. It will be understood that the width of the lower parts of the seats is substantially less than the spacing between the hollow structures 13 and 14. The minimum spacing between the middle members 18 and 23 is no more than ten times the width of these members and is more preferably no more than five times the width of these members. In a case where these members do not have a uniform width, then the comparison is made with the maximum width of the middle members.

The distance from the driver's seat 29, 30 to external surfaces of the vehicle at opposite sides of the vehicle are more than one half of the width of the seat. Accordingly, in the event of a side impact with the vehicle, collapse of the vehicle body from the external surface for a distance which is approximately half of the width of the seat can occur without injury necessarily being caused to the driver. As can be seen from Figure 2, the maximum width of the vehicle occurs at a level above the level of the lowest part of the floor 17. When the vehicle stands on a horizontal surface, the maximum width of the vehicle occurs at a level which is spaced above that surface by a distance which is more than the vertical dimension of each of the hollow structures 13 and 14. Preferably, the level of the maximum width of the vehicle is spaced above the surface on which the vehicle stands by a distance which is more than one and a half times the vertical dimension of each of the hollow structures 13 and 14. However, this distance is preferably no more than three times the vertical dimension of the hollow structures. The level of the maximum width of the vehicle is above the level of the centre of gravity of the vehicle.

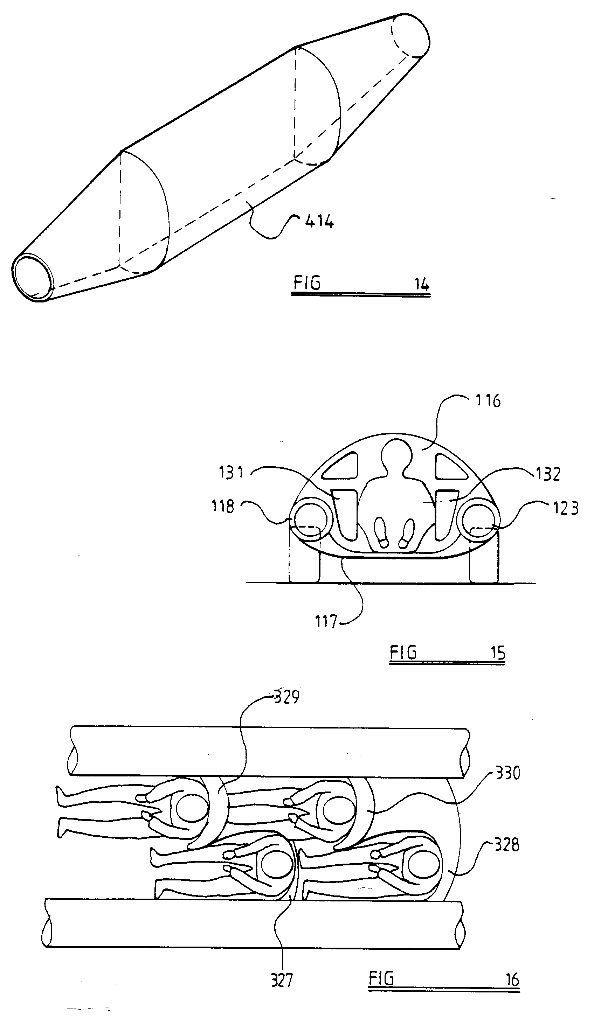

Figure 15 illustrates a modification of the shape of the transverse cross section of the vehicle of Figure 2. In Figure 15, parts of the vehicle corresponding to those shown in Figure 2 are identified by like reference numerals with the prefix 1. The modified vehicle of Figure 15 differs from that of Figure 2 in that the level at which the maximum width of the vehicle occurs is spaced somewhat further from a level surface on which the vehicle stands. In this example also, the level of maximum width of the vehicle is above the level of the centre of gravity of the vehicle. In the arrangement of Figure 15, the level at which the maximum width of the vehicle occurs is at least approximately the same as the level of the centre of gravity of the torso of the driver and the level of the centre of gravity of the torso of the passenger. This arrangement reduces the risk of either the driver or the passenger being thrown over one of the hollow structures at a side of the vehicle, in the event of side impact.

In the modified vehicle of Figure 15, each of the hollow members is spaced above a horizontal surface on which the vehicle stands by a distance exceeding the height of the hollow member. Furthermore, the floor 117 is inclined downwardly from each of the hollow members and is generally convex towards the ground. With the exception of the differences hereinbefore mentioned, the arrangement of the vehicle of Figure 15 is the same as that of the vehicle illustrated in Figures 1, 2 and 3.

The middle member 18 has an elongated, tubular, external extension 33 which projects from the member 18 towards the middle member 23. This extension is open at its rearward end and extends forwards from the backrest 29 of the front seat to define a space for receiving the left hand leg of the passenger. The front end of the extension 33 may be closed. The extension is arranged with its length extending generally in the direction of normal travel of the vehicle. The height of the extension may vary along its length, being greater at its rear end. It will be noted that the extension 33 lies generally between the lower part 30 of the front seat and the middle member 18. The extension may be formed integrally with the middle member 18 or secured to the middle member. A corresponding extension 34 is provided on the middle member 23 to accommodate the right leg of the passenger.

The extensions 33 and 34 may be omitted, there being provided between the front seat and the hollow structures 13 and 14 spaces to accommodate the legs of a passenger occupying the rear seat. Furthermore, in a case where structures to enclose the legs or parts of the legs of the passenger are provided, these structures may be formed on the floor or on the front seat, rather than on the hollow side structures.

The floor of the vehicle body 12 illustrated in Figures 1, 2 and 3 includes an upper layer which is not flat and which may incorporate or be secured to parts of the extensions 33 and 34 and of the lower seat parts 28 and 30.

For driving the front wheels of the vehicle, there is provided a motor 35 which is disposed between the front members 19 and 22. The front end member 25 may be attached to or may be incorporated in a housing of the motor. Alternatively, the front end member may be spaced from the motor so that there is some degree of freedom for rearwards movement of the front end member relative to the motor. The motor 35 may be an internal combustion engine or an electric motor. There is also provided a transmission indicated at 36 for transmitting drive from the motor to the front wheels. The transmission may include a gearbox or torque converter. The motor 35 may lie entirely between the front members 19 and 22. Alternatively, the motor may protrude forwards beyond the front members. Furthermore, the motor could lie entirely forwards of the front members.

Respective motors may be provided for each of two or all of the four wheels of the vehicle. Suitable motors are electric motors and hydraulic motors. These motors may be housed substantially within the associated wheels. In a case where one or more electric motors is provided, the or each motor may be used for braking and serve as an electrical generator during braking. In a case where one or more electric motors is provided, batteries for supplying power to the motor or motors may be distributed around the vehicle body and housed in spaces defined by the body, for example within bulk heads or within the floor structure.

The front and rear of the vehicle are approximately semi-circular, as viewed in plan, to minimise interaction in impact with other vehicles. Fairings may be provided over and around the wheels. The hollow structures extend laterally outwards as far as or beyond the outer faces of the wheels.

A suspension for the wheel 10 may be attached to the front member 19 at a position spaced forwards from the middle member 18. Adjacent to the wheel 10, the transverse cross section of the front member 19 may be considerably smaller than the transverse cross section of the middle member 18, to provide a space for accommodating the wheel 10 and allowing it to swivel for steering.

In a case where the motor 35 is an internal combustion engine, a fuel tank may be accommodated adjacent to the rear end member 26. A battery and a spare wheel also may be accommodated in the body 12 near to the rear of the body. The fuel tank, battery and spare wheel may be accommodated mainly between the rear members 20 and 24. Alternatively, the fuel tank, spare wheel and battery may be accommodated entirely or mainly to the rear of the rear members 20 and 24. It will be noted that the transverse cross section of the rear member 24 is smaller adjacent to the wheel 11 than it is adjacent to the middle member 18, in order to provide a space for the wheel. The rear member 24 may extend only beside the wheel or both beside and above the wheel.

The engine or other motor for driving the vehicle may alternatively be provided adjacent to the rear of the vehicle. In this case, the transmission may be arranged for providing drive to rear wheels of the vehicle. Generally, the front wheels will be the only steerable wheels of the vehicle. However, it would be within the scope of the invention to provide rear steerable wheels. It will be understood that the space necessary to accommodate a steerable wheel is greater than the space required to accommodate a non-steerable wheel. Thus, the provision of a steerable front wheel imposes on the dimensions of the adjacent hollow structure greater limitations than does the provision of a non-steerable rear wheel.

The hollow structures 13 and 14 contain means for dissipating kinetic energy upon deformation. The means for dissipating kinetic energy may comprise a fluid, either a gas or a liquid. Alternatively, the means for dissipating kinetic energy may comprise a structure formed of solid materials, for example metals or plastics materials, arranged in a manner which adapts the materials for progressive collapse. A honeycomb structure is an example of such an arrangement. A representative example of means comprising a fluid is shown diagrammatically in Figure 8, where a piston and cylinder unit 37 is shown with its longitudinal axis coinciding with the longitudinal axis of the middle member of the hollow structure. Means is provided for transmitting force along that axis between the front member of the hollow structure and one of the piston and cylinder and for transmitting force along the axis between the rear member of the hollow structure and the other of the piston and cylinder. The piston and cylinder unit is arranged in a known manner to operate as a damper. Alternatively, the middle member of the hollow structure may be formed as the cylinder and the front member and the rear member both formed as pistons sliding in the middle member. A compressible structure may be interposed between the front and rear members. The compressible structure may include a bag containing air or other gas or a mass of compressible material, for example a foamed plastics material or a honeycomb or like structure. A foamed plastics material or a honeycomb structure will provide yieldable support to the middle member of the hollow structure against lateral collapse of the middle member under the action of an externally applied force. It will be understood that the end members of the hollow structures also may contain a foamed plastics material or a honeycomb or like structure or other means for resisting collapse and dissipating kinetic energy upon collapse.

In the vehicle illustrated in Figures 1, 2 and 3, the middle members 18 and 23 are substantially cylindrical, are spaced 500mm to 900mm apart and have a diameter of 300mm to 500mm. The vehicle may be modified as illustrated in Figure 4 by modifying the transverse cross section of the middle members 18 and 23, at least adjacent to the extensions 33 and 34. Figure 4 shows that the interface between a middle member and its extension is at least approximately flat so that the profile of the middle member is substantially D-shaped. The transverse cross sectional shape of the extension is substantially rectangular.

In the event of impact at the front of the vehicle, the front end member 25 and the front members 19 and 22 will move relative to the middle members 18 and 23. Such movement will be opposed and kinetic energy will be dissipated. Similarly, an impact on the rear of the vehicle will cause the rear end member 26 and the rear members 20 and 24 to move relative to the middle members 18 and 23, such movement will be opposed and kinetic energy will be dissipated. Oblique impacts on comers of the vehicle or offset head-on impacts also will cause movement of one or other of the end members relative to the middle members and kinetic energy will be dissipated in a similar way.

The connection between the engine mounting 25 and the body of the vehicle may include at least one pivot which will permit unequal displacements of the right-hand and left-hand extremities of the engine relative to the body of the vehicle during impact of the vehicle. This arrangement would be advantageous in the event of impact with one front corner of the vehicle, that is an offset head-on impact. During normal use of the vehicle, pivoting of the engine relative to the body may be restrained by at least one shear pin or other components adapted to yield during impact.

The front end member 25 and the means for mounting the motor, at least when this is in the form of an internal combustion engine mounted near to the front of the body, are arranged to force the engine and gearbox downwards and rearwards in an impact so that the engine goes beneath the floor 17.

In the example of vehicle illustrated in Figures 1, 2 and 3 respective centres of the front and rear seats lie substantially on a longitudinal centre-line of the body 12 of the vehicle. The backrest 29 of the front seat is interposed between the passenger and the driver. Both backrests may be inclined to the vertical, preferably at substantially the same angle so that the backrests are at least approximately parallel to each other. The perpendicular distance between the backrests may be greater than the width of lower part 30 of the front seat. With the arrangement of Figures 1, 2 and 3, the backrest 29 will generally lie between the knees of the passenger.

The vehicle may be modified to provide the arrangement illustrated in Figure 5. In this modified arrangement, the space between the backrests is considerably less than in the case of the vehicle shown in Figures 1, 2 and 3 and the knees of the passenger lie forwards of the backrest 29. Furthermore, the opening between the backrest 29 and the middle member 18 has a considerably greater height then is represented in Figure 2. The extensions for receiving the legs of the passenger may be markedly tapered, being relatively high adjacent to the backrest 29 and relatively low at their front ends. For example, the height adjacent to the backrest may be at least twice the height adjacent to the front end.

A further modified vehicle is illustrated in Figure 6. In this Figure, parts corresponding to those hereinbefore described with reference to Figures 1, 2 and 3, are identified by like reference numerals with the prefix 1. The preceding description is deemed to apply to the vehicle of Figure 6, except for the differences hereinafter mentioned. Respective centres of the front and rear seats of the vehicle shown in Figure 6 are offset in opposite directions from a longitudinal centreline of the vehicle body. Accordingly, the space for accommodating the legs of the passenger lies entirely at one side of the front seat, lying between that seat and either the middle member 118 or the middle member 123. The backrest 129 of the front seat is preferably incorporated in a bulk head which extends laterally to both of the middle members 118 and 123, an opening being provided between the bulk head and one of the middle members to accept the legs of the passenger. The backrests 127 and 129 both face substantially in the direction of normal travel of the vehicle. As viewed along this direction, the backrests may overlap somewhat with each other.

A further example of a modified vehicle is illustrated in Figure 7 by a view similar to that of Figure 6. In Figure 7, parts corresponding to those hereinbefore described with reference to Figures 1, 2 and 3 are identified by like reference numerals with the prefix 2 and the preceding description of the vehicle is deemed to apply to the vehicle of Figure 7, except for differences hereinafter mentioned.

The seats of the vehicle shown in Figure 7 are offset in opposite directions with respect to a longitudinal centreline of the vehicle but to a smaller extent than is the case in the vehicle of Figure 6. The backrest 229 of the front seat faces in the direction of normal travel of the vehicle. The backrest 127 of the rear seat faces in a direction inclined to the normal direction of travel of the vehicle at an angle which may be in the range 10° to 30°. The space for accommodating the legs of the passenger is between the front seat and one of the middle members 218 and 223. This one middle member only may be provided with a tubular extension for enclosing the legs of the passenger. A similar tubular extension may be provided in the vehicle of Figure 6. It will be noted that, in the vehicle of Figure 7, the space for accommodating the legs and feet of the passenger may intrude somewhat on the otherwise circular profile of the middle member 218.

The arrangement of the pair of seats illustrated in Figure 6 or the arrangement of the pair of seats illustrated in Figure 7 may be duplicated in a single vehicle, so that there are four seats in the space defined by the vehicle body, each seat being offset longitudinally from the other seats. Thus, there may be a pair of left-hand seats and a pair of right-hand seats offset longitudinally relative to the seats of the left-hand pair. Such an arrangement of seats in a vehicle is shown in Figure 16.

In the modified vehicle shown in Figure 16, there are provided a pair of left-hand seats whose backrests are indicated at 327, 328 and a pair of right-hand seats whose backrests are indicated at 329, 330. The pairs of seats are offset longitudinally of the vehicle from one another, so that each seat is offset from the other seats. Thus seats for four persons may be provided in the space defined by the vehicle body. Yet a further alternative is that three seats could be provided, for example arranged as the foremost three seats of those shown in Figure 16.

Figures 9 and 10 show diagrammatically transverse cross sections of middle members which may be substituted for the middle member 18 of the hollow structure shown in Figure 8. The middle member shown in Figure 9 comprises an assembly of three substantially cylindrical tubes enclosed in a non-circular envelope. The tubes may have different diameters. For example, in the example illustrated in Figure 9, tubes 39 and 40 having the same diameter are stacked one above the other and a tube 41 of smaller diameter lies beside a interface between the larger tubes. The assembly of three tubes may be constructed as an integral body, for example of a reinforced plastics composition.

The example illustrated in Figure 10 comprises a pair of substantially cylindrical tubes enclosed by an envelope 42. Respective webs 43 and 44 may extend from the interface between the tubes to the envelope. The tubes 45 and 46, the envelope 42 and the webs 43 and 44 may all be incorporated in an integral body.

The tubes illustrated in Figures 9 and 10 or some of them may contain energy-absorbing structures, for example a honeycomb structure formed of metal or a foamed plastics material. Different densities, materials and orientations may be used in the various tubes and/or within the same tube. For example, in a tube which forms a part of a hollow structure, there may be provided in opposite end portions of the tube honeycomb structure oriented to provide maximum resistance to collapse under the action of force acting along the tube and, within an intermediate portion of the tube, honeycomb structure oriented to provide maximum resistance to force acting in a direction towards the axis of the tube.

One or both of the hollow structures of a vehicle may incorporate one or more tubes which have a function additional to the function of yieldably resisting collapse of the tube. For example, an exhaust gas duct or an air duct or a duct for conveying other heat transfer fluid may be incorporated in one of the hollow structures. A hollow structure may comprise a number of tubes arranged with their lengths extending along the hollow structure, one or more of these tubes being arranged as a duct, along which a fluid flows during use of the vehicle. Spaces between the tubes may be occupied by a solid foam. In a hollow structure which comprises a tube or a number of tubes, the or one of the tubes may contain means for absorbing energy in the event of impact, such means being generally as hereinbefore described. A cross section of a representative hollow structure of this kind is shown in Figure 11, where 47 is an envelope of the hollow structure, 48 is a larger diameter tube which constitutes an exhaust gas duct and 49 is an assembly of smaller diameter tubes which contribute to the stiffness of the hollow structure. The tubes 49 may be surrounded by a foamed plastics material which normally holds the tubes 49 in the required positional relation relative to each other and relative to the envelope 47. The hollow structure may comprise a further, larger diameter tube 50 which contains a piston and/or an air-bag for absorbing energy in the event of impact.

Figure 1 shows seat backrests which are substantially upright. The arrangement may be modified to provide inclined backrests. The bulkheads 15 and 46 also may be inclined to the horizontal. The rear seat may be spaced sufficiently far from the front seat for the passenger to be accommodated entirely behind the front seat. This spacing may be quite small, if the passenger does not extend his legs. In all cases, the seats may be equipped with full harnesses for restraining the occupants. In place of a single rear seat, there may be provided a pair of rear seats to accommodate two children behind the front seat.

In Figure 12 there is shown a diagrammatic representation of a chassis structure of the vehicle embodying the present invention. This structure is of substantially rectangular form and defines a safety cell for receiving the driver and passenger of the vehicle. The longer members of the rectangle 213 and 214 correspond to the hollow structures 13 and 14 of the vehicle shown in Figures 1, 2 and 3. These members may have any of the forms hereinbefore described and shown in the accompanying drawings. The members 213 and 214 are hollow, elongated and contain means for yieldably opposing collapse of these members and thereby absorbing kinetic energy. The shorter members of the rectangle are identified by the reference numerals 215 and 216. These members also are of tubular form and preferably contain means for yieldably resisting collapse of the members. They correspond to the rear bulkhead 15 and front bulkhead 16 of the vehicle shown in Figures 1, 2 and 3. The members 215 and 216 are secured at their ends to the members 213 and 214 adjacent to the ends of the latter members. The ends of the members 213 and 214 are preferably open to receive load-transmitting components which protrude forwards and rearwards from the basic chassis structure and which, in the event of front or rear impact, transmit force to the means inside the members 213 and 214 for yieldably resisting collapse of the structure.

In practical embodiments of the invention, the side members of the basic chassis structure may differ from the simple, cylindrical shape of the members 213 and 214 shown in Figure 12. A first example of such alternative shape is shown in Figure 13. The transverse cross section of the chassis side member shown in Figure 13 is essentially "D" shaped; whereas the corresponding cross sectional shape of the members shown in Figure 12 is circular. Load-transmitting members received in respective end portions of the chassis member 314 shown in Figure 13 and which corresponds to the member 214 of Figure 12 are tapered. Their end portions of larger transverse cross section are received within the member 314 and their end portions of smaller transverse cross section extend forwards and rearwards from the member 314. The tapered members are identified in Figure 13 by the reference numerals 319 and 320 and correspond functionally to the members 19 and 20 of the vehicle shown in Figures 1, 2 and 3. During manufacture, the members 319 and 320 are secured in fixed positions to the member 314. In the event of front or rear impact, the fixings may yield to permit one or other of the members 319 and 320 to slide inside the member 314.

A further example of a side chassis member which may be incorporated in the basic structure of Figure 12 is illustrated in Figure 14. This chassis member has opposite end portions of tapered form and an intermediate portion of uniform transverse cross section. The overall shape and function of the member shown in Figure 14 is essentially the same as that of the assembly 314, 319 and 320 shown in Figure 13. However, the member 414 shown in Figure 14 does not comprise telescopically arranged parts. In the event of front or rear impact, one or other of the tapered end portions collapses progressively whilst the intermediate portion is not substantially deformed.

In the assembled vehicle, the tapered end portions of the member 414 shown in Figure 14 and the members 319 and 320 of the structure shown in Figure 13 are connected with suspension components of the vehicle, by means of which the chassis structure is supported from the wheels.

In the event of a lateral collision at one of the members 18 and 23 shown in Figure 3 or corresponding members of alternative versions of the vehicle, the member 18 or 23 which suffers the initial impact collapses under the impact, thereby absorbing energy and mitigating the effect of the impact on an occupant of the vehicle. In the event of a front collision, an offset front collision, a rear collision or an offset rear collision, force will be transmitted to at least one of the members 18 and 23 by one or more of the front and rear members, telescoping of at least one of the front and rear members with respect to one of the members 18 and 23 will occur and the energy absorbing means inside the hollow structure will be deformed, thereby absorbing kinetic energy and mitigating the effect of impact on an occupant of the vehicle.

## Claims

1. A vehicle body structure defining an internal space for accommodating a person and comprising a right-hand, elongated member (23), a left-hand, elongated member (18), a front member (22,25) interposed between a front end of the body and the right-hand member (23) and a rear member (24,26) separate from the front member and interposed between a rear end of the body and the right-hand member, wherein the front member and the rear member are distinct from the right-hand and left-hand members (22,18) and are able to move along the vehicle relative to the right-hand and left-hand members in the event of severe front or rear collision between the vehicle body structure and another structure, and wherein at least one of the front member (22) and the right-hand member (23) is hollow and contains energy-absorbing means for yieldably opposing rearwards movement of the front member relative to the right-hand member and for absorbing kinetic energy when said movement occurs, characterized therein, that said right-hand and left-band members define opposite lateral boundaries of said internal space for accommodating a person.

2. A vehicle body according to Claim 1 further characterised in that the front member (22,25) is arranged telescopically with respect to the right-hand member (23).

3. A vehicle body according to Claim 1 further characterised in that the front member (22,25,10) is arranged telescopically with respect to both the right-hand member (23) and the left-hand member (18).

4. A vehicle body according to any preceding claim further characterised in that the rear member (24,26) is arranged telescopically with respect to the right-hand member (23).

5. A vehicle body according to any preceding claim further characterised in that the right-hand member (23) and the left-hand member (18) both contain energy absorbing means.

6. A vehicle body according to any preceding claim further characterised in that each of the right-hand and left-hand members (23,18) is substantially straight.

7. A vehicle body according to Claim 6 further characterised in that the right-hand and left-hand members (23,18) are mutually parallel.

8. A vehicle body according to Claim 6 or Claim 7 further characterised in that the front member (22,25,10) has respective substantially straight portions (22,19) adjacent to the right-hand and left-hand members and associated telescopically therewith.

9. A vehicle body according to any one of Claims 6, 7 and 8 further characterised in that the rear member (24,26,20) has respective substantially straight portions (24,20) adjacent to the right-hand and left-hand members and in telescopic relation therewith.

10. A vehicle body according to any preceding claim further characterised in that said right-hand and left-hand members (23,18) define external, lateral boundaries of the vehicle body.

11. A vehicle body according to any preceding claim further characterised in that at least a part of said front portion lies forwards of said space for accommodating a person.

12. A vehicle body according to any preceding claim further characterised in that at least a part of said rear member lies rearwards of said space for accommodating a person.

13. A vehicle body according to any preceding claim further characterised in that there is between the right-hand and left-hand members (23,18) and in said space for accommodating a person at least one seat (30) and wherein the right-hand and left-hand members have a height which is more than one quarter of the height of the seat.

14. A vehicle body according to any preceding claim further characterised in that the width of the right-hand member (23) and the width of the left-hand member (18) are both more than one tenth of the distance between the right-hand and left-hand members.

15. A vehicle body according to any preceding claim further characterised in that there are, in said space for accommodating a person, two seats (30,28) one behind the other and wherein there is between one of the seats (30) and each of the right-hand and left-hand members (23,18) a respective space to accommodate a corresponding leg of a person supported by the other seat (28).

16. A vehicle body according to Claim 15 further characterised in that each of said right-hand and said left-hand members has an external, elongated, tubular extension (33,34) projecting from the member towards the other member and arranged with its length approximately parallel to the direction of normal travel, the extension being open, at least at its rear end, and lying at least partly between said one of the seats (30) and the member (23,18) concerned.

17. A vehicle body according to any of claims 1 to 14 further characterised in that there are, in said space for accommodating a person two seats offset from one another both transversely and lengthwise of the vehicle body (129,127;229,227;329,327).

18. A vehicle body according to claim 17 further characterised by a left-hand pair of seats (327,328) and a right-hand pair of seats (329,370), said pairs of seats being offset longitudinally of the vehicle from one another.

19. A vehicle body according to any preceding claim further characterised by a floor (17;117) extending between lower margins of the right-hand and left-hand members.

20. A vehicle body according to Claim 19 further characterised in that the floor (17) is substantially flat.

21. A vehicle body according to Claim 19 further characterised by the floor (117) is substantially convex towards the ground.

22. A vehicle body structure according to any one of the preceding claims further characterised in that said right-hand (23) and left-hand (18) elongated members are connected by transverse members (25,16) to define a substantially rectangular safety cell.

## Patentansprüche

1. Kraftfahrzeug-Karosseriestruktur, welche einen Innenraum zum Unterbringen einer Person definiert und ein rechtsseitiges, längliches Element (23), ein linksseitiges, längliches Element (18), ein vorderes Element (22, 25), das zwischen einem vorderen Ende des Gehäuses und dem rechtshändigen Element (13) angeordnet ist, und ein rückwärtiges Element (24, 26), das von dem vorderen Element getrennt ist und zwischen einem rückwärtigen Ende des Körpers und dem rechtsseitigen Element angeordnet ist, aufweist, wobei das vordere Element und das rückwärtige Element von dem rechtsseitigen und dem linksseitigen Element (22, 18) unterschiedlich sind und sich entlang dem Fahrzeug relativ zu dem rechtsseitigen und dem linksseitigen Element im Falle eines starken Zusammenstoßes von vorn oder hinten zwischen der Fahrzeug-Karosseriestruktur und einer weiteren Struktur bewegen können, und wobei wenigstens das vordere Element (22) oder das rechtsseitige Element (23) hohl ist und eine energieabsorbierende Einrichtung enthält, um sich der Rückwärtsbewegung des vorderen Elementes relativ zu dem rechtsseitigen Element nachgebend entgegenzusetzen und um kinetische Energie zu absorbieren, wenn die Bewegung auftritt, dadurch gekennzeichnet, daß das rechtsseitige und linksseitige Element gegenüberliegende seitliche Grenzen des Innenraums zum Unterbringen einer Person definieren.

2. Fahrzeugkarosserie nach Anspruch 1, weiter dadurch gekennzeichnet, daß das vordere Element (22, 25) teleskopisch in bezug auf das rechtsseitige Element (23) angeordnet ist.

3. Fahrzeugkarosserie nach Anspruch 1, weiter dadurch gekennzeichnet, daß das vordere Element (22, 25, 10) teleskopisch in bezug auf sowohl das rechtsseitige Element (23) als auch das linksseitige Element (18) angeordnet ist.

4. Fahrzeugkarosserie nach einem der vorangehenden Ansprüche, weiter dadurch gekennzeichnet, daß das rückwärtige Element (24, 26) teleskopisch in bezug auf das rechtsseitige Element (23) angeordnet ist.

5. Fahrzeugkarosserie nach einem der vorangehenden Ansprüche, weiter dadurch gekennzeichnet, daß das rechtsseitige Element (23) und das linksseitige Element (18) beide energieabsorbierende Mittel enthalten.

6. Fahrzeugkarosserie nach einem der vorangehenden Ansprüche, weiter dadurch gekennzeichnet, daß sowohl das rechtsseitige als auch das linksseitige Element (23, 18) im wesentlichen gerade ist.

7. Fahrzeugskarosserie nach Anspruch 6, weiter dadurch gekennzeichnet, daß das rechtsseitige und linksseitige Element (23, 18) wechselweise parallel zueinander sind.

8. Fahrzeugskarosserie nach Anspruch 6 oder Anspruch 7, weiter dadurch gekennzeichnet, daß das vordere Element (22, 25, 10) jeweilige im wesentlichen gerade Teile (22, 19) hat, die dem rechtsseitigen und linksseitigen Element benachbart liegen und ihnen teleskopisch zugeordnet sind.

9. Fahrzeugskarosserie nach einem der Ansprüche 6, 7 und 8, weiter dadurch gekennzeichnet, daß das rückwärtige Element (24, 26, 20) jeweils im wesentlichen gerade Teile (24, 20) hat, die dem rechtsseitigen und linksseitigen Element benachbart liegen und damit in teleskopischer Beziehung stehen.

10. Fahrzeugkarosserie nach einem der vorangehenden Ansprüche, weiter dadurch gekennzeichnet, daß das rechtsseitige und linksseitige Element (23, 18) äußere, seitliche Grenzen der Fahrzeugskarosserie definieren.

11. Fahrzeugkarosserie nach einem der vorangehenden Ansprüche, weiter dadurch gekennzeichnet, daß wenigstens ein Teil des vorderen Abschnittes vor dem Raum zum Unterbringen einer Person liegt.

12. Fahrzeugkarosserie nach einem der vorangehenden Ansprüche, weiter dadurch gekennzeichnet daß wenigstens ein Teil des rückwärtigen Elementes hinter dem Raum zum Unterbringen einer Person liegt.

13. Fahrzeugkarosserie nach einem der vorangehenden Ansprüche, weiter dadurch gekennzeichnet, daß es zwischen dem rechtsseitigen und dem linksseitigen Element (23, 18) und in dem Raum zum Unterbringen einer Person wenigstens einen Sitz (30) gibt, wobei das rechtsseitige und das linksseitige Element eine Höhe haben, die mehr als ein Viertel der Höhe des Sitzes beträgt.

14. Fahrzeugkarosserie nach einem der vorangehenden Ansprüche, weiter dadurch gekennzeichnet, daß die Breite des rechtsseitigen Elementes (23) und die Breite des linksseitigen Elementes (18) beide mehr als ein Zehntel des Abstandes zwischen dem rechtsseitigen und dem linksseitigen Element betragen.

15. Fahrzeugkarosserie nach einem der vorangehenden Ansprüche, weiter dadurch gekennzeichnet, daß es in dem Raum zum Unterbringen einer Person zwei Sitze (30, 28) gibt, einen hinter dem anderen, und wobei es zwischen einem der Sitze (30) und jedem der rechtsseitigen und linksseitigen Elemente (23, 18) einen jeweiligen Raum zum Unterbringen eines entsprechenden Beines einer Person gibt, die auf dem anderen Sitz (28) gehalten wird.

16. Fahrzeugskarosserie nach Anspruch 15, weiter dadurch gekennzeichnet, daß sowohl das rechtsseitige als auch das linksseitige Element eine äußere, längliche, rohrförmige Verlängerung (33, 34) aufweist, die von dem Element in Richtung auf das andere Element hervorsteht und so angeordnet ist, daß ihre Länge nahezu parallel zu der Richtung der normalen Bewegung ist, wobei die Verlängerung offen ist, wenigstens an ihrem rückwärtigen Ende, und wenigstens teilweise zwischen einem der Sitze (30) und dem betreffenden Element (23, 18) liegt.

17. Fahrzeugkarosserie nach einem der Ansprüche 1 bis 14, weiter dadurch gekennzeichnet, daß, in dem Raum zum Unterbringen einer Person, zwei Sitze vorgesehen sind, die voneinander versetzt sind, sowohl in Querrichtung als auch in Längsrichtung der Fahrzeugskarosserie (129, 127; 229, 227; 329, 327).

18. Fahrzeugskarosserie nach Anspruch 17, weiter gekennzeichnet durch ein linksseitiges Sitzepaar (327, 328) und ein rechtsseitiges Sitzepaar (329, 370) wobei die Sitzepaare in Längsrichtung des Fahrzeuges voneinander versetzt sind.

19. Fahrzeugkarosserie nach einem der vorangehenden Ansprüche, weiter gekennzeichnet durch einen Boden (17; 117), der sich zwischen den unteren Rändern des rechtsseitigen und linksseitigen Elementes erstreckt.

20. Fahrzeugkarosserie nach Anspruch 19, weiter dadurch gekennzeichnet, daß der Boden (117) im wesentlichen eben ist.

21. Fahrzeugkarosserie nach Anspruch 19, weiter dadurch gekennzeichnet, daß der Boden (117) im wesentlichen konvex in Richtung auf den Untergrund ist.

22. Fahrzeugskarosseriestruktur nach einem der vorangehenden Ansprüche, weiter dadurch gekennzeichnet, daß das rechtsseitige (23) und linksseitige (18) längliche Element durch querverlaufende Elemente (25, 16) verbunden sind, um eine im wesentlichen rechteckige Sicherheitszelle zu definieren.

## Revendications

1. Une structure de caisse de véhicule définissant un espace intérieur pour y loger une personne et comprenant, du côté droit, un élément allongé de droite (23), un élément allongé de gauche (18), un élément frontal (22, 25) interposé entre une extrémité frontale de la caisse de véhicule et l'élément de droite (23) et un élément arrière (24, 26) sépare de l'élément frontal et placé entre une extrémité, arrière de la caisse de véhicule et l'élément de droite, structure dans laquelle l'élément frontal et l'élément arrière sont distincts des éléments de droite et de gauche (22, 18) et sont susceptibles de se déplacer le long du véhicule relativement aux éléments de droite et de gauche en cas de collision frontale ou arrière sévère entre la structure de caisse de véhicule et une autre structure, et dans laquelle au moins l'un desdits élément frontal (22) et élément de droite (23) est creux et contient des moyens d'absorption d'énergie pour s'opposer de façon résiliente au déplacement vers l'arrière de l'élément frontal par rapport à l'élément de droite et pour absorber l'énergie cinétique lorsque ledit déplacement se produit, caractérisé en ce que lesdits éléments de droite et de gauche définissent les limites latérales opposées dudit espace intérieur pour y loger une personne.

2. Une caisse de véhicule selon la revendication 1, caractérisée en outre en ce que l'élément frontal (22, 25) est disposé de façon télescopique par rapport à l'élément de droite (23).

3. Une caisse de véhicule selon la revendication 1, caractérisée en outre en ce que l'élément frontal (22, 25, 10) est disposé de façon télescopique par rapport aux éléments de droite (23) et de gauche (18).

4. Une caisse de véhicule selon l'une quelconque des revendications précédentes, caractérisée en ce que l'élément arrière (24, 26) est disposé de façon télescopique par rapport à l'élément de droite (23).

5. Une caisse de véhicule selon l'une quelconque des revendications précédentes, caractérisée en ce que l'élément de droite (23) et l'élément de gauche (18) contiennent tous les deux des moyens d'absorption d'énergie.

6. Une caisse de véhicule selon l'une quelconque des revendications précédentes, caractérisée en ce que chacun des éléments de droite et de gauche (23, 18) est sensiblement droit.

7. Une caisse de véhicule selon la revendication 6, caractérisée en outre en ce que les éléments de droite et de gauche (23, 18) sont parallèles entre eux.

8. Une caisse de véhicule selon la revendication 6 ou la revendication 7, caractérisée en outre en ce que l'élément frontal (22, 25, 10) a des parties respectives sensiblement droites (22, 19) adjacentes aux éléments de droite et de gauche et associées de façon télescopique avec ceux-ci.

9. Une caisse de véhicule selon l'une des revendications 6, 7 et 8, caractérisée en outre en ce que l'élément arrière (24, 26, 20) a des parties respectives sensiblement droites (24, 20) adjacentes aux éléments de droite et de gauche et en relation télescopique avec ceux-ci.

10. Une caisse de véhicule selon l'une quelconque des revendications précédentes, caractérisée en outre en ce que lesdits éléments de droite et de gauche (23, 18) définissent les limites extérieures latérales de la caisse de véhicule.

11. Une caisse de véhicule selon l'une quelconque des revendications précédentes, caractérisée en outre en ce qu'au moins une partie de ladite partie frontale se trouve à l'avant desdits espaces pour y loger une personne.

12. Une caisse de véhicule selon l'une quelconque des revendications précédentes, caractérisée en outre en ce qu'au moins une partie dudit élément arrière se trouve à l'arrière dudit espace pour y loger une personne.

13. Une caisse de véhicule selon l'une quelconque des revendications précédente, caractérisée eu outre en ce que entre les éléments de droite et de gauche (23, 18) et dans ledit espace pour y loger une personne, est disposé au moins un siège (30) et en ce que les éléments de droite et de gauche ont une hauteur qui est supérieure à un quart de la hauteur du siège.

14. Une caisse de véhicule selon l'une quelconque des revendications précédentes, caractérisée en outre en ce que la largeur de l'élément de droite (23) et la largeur de l'élément de gauche (18) sont tous les deux supérieures à un dixième de la distance entre les éléments de droite et de gauche.

15. Une caisse de véhicule selon l'une quelconque des revendications précédentes, caractérisée en outre en ce que sont situés, dans ledit espace pour y loger une personne, deux sièges (30, 28) disposés l'un derrière l'autre et en ce qu'est disposé entre l'un des sièges (30) et chacun des éléments de droite et de gauche (23, 18) un espace respectif pour y loger une jambe respective d'une personne assise sur l'autre siège (28).

16. Une caisse de véhicule selon la revendication 15, caractérisée en outre en ce que chacun desdits éléments de droite et de gauche comporte un prolongement extérieur, tubulaire allongé (33, 34) faisant saillie d'un élément vers l'autre élément et qui dans le sens de sa longueur est disposé approximativement parallèle à la direction normale de déplacement, le prolongement étant ouvert, au moins à son extrémité arrière, et étant disposé au moins partiellement entre l'un des sièges (30) et l'élément (23, 18) concerné.

17. Une caisse de véhicule selon l'une des revendications 1 à 14, caractérisée en outre en ce qu'est disposé, dans ledit espace pour y loger une personne, deux sièges décalés l'un par rapport à l'autre, dans le sens transversal et longitudinal de la caisse du véhicule (129, 127; 229, 227, 329, 327).

18. Une caisse de véhicule selon la revendication 17, caractérisée en outre par une paire de sièges à gauche (327, 328) et une paire de sièges à droite (329, 370), lesdites paires de sièges étant décalées dans le sens longitudinal du véhicule l'une par rapport à l'autre.

19. Une caisse de véhicule selon l'une quelconque des revendications précédentes, caractérisée par un plancher (17; 117) s'étendant entre les bords inférieures des éléments de droite et de gauche.

20. Une caisse de véhicule selon la revendication 19, caractérisée en outre en ce que le plancher (17) est sensiblement plat.

21. Une caisse de véhicule selon la revendication 19, caractérisée en outre en ce que le plancher (117) est sensiblement convexe vers le sol.

22. Une caisse de véhicule selon l'une quelconque des revendications précédentes, caractérisée en outre en ce que les éléments allongés de droite (23) et de gauche (18) sont reliés par des éléments transversaux (25, 16) de façon a définir une cellule de sécurité sensiblement rectangulaire.
